# EUROPEAN PATENT SPECIFICATION

(11) **EP 0 278 332 B1**
(45) Date of publication and mention of the grant of the patent: **27.04.1994**
(21) Application number: 88101263.7
(22) Date of filing: 28.01.1988
(51) Int. Cl.: G02B 26/10

(54) **Beam deflector and laser beam printer using same**
Strahlablenker und damit arbeitender Laserdrucker
Déflecteur de faisceaux et imprimante à laser utilisant ce déflecteur

(30) Priority: 30.01.1987 JP 19915/87; 28.04.1987 JP 107002/87; 30.06.1987 JP 101356/87 U
(43) Date of publication of application: 17.08.1988
(60) Divisional application: 93106301.0
(73) Proprietor: CANON KABUSHIKI KAISHA, Tokyo (JP)
(72) Inventor: Sugiura, Yoshinori, Kawasaki-shi Kanagawa-ken (JP)
(74) Representative: Tiedtke, Harro, Dipl.-Ing.

(56) References cited:
- DE-A- 3 047 813
- DE-A- 3 126 642
- US-A- 3 800 080

## Description

### FIELD OF THE INVENTION AND RELATED ART

The present invention relates to a beam deflector usable with a bar code reader in which a bar code is scanned by a light beam, usable with a laser beam printer or usable with a laser beam aligner or the like, and more particularly to a laser beam printer using the beam deflector.

Conventionally, a laser beam is scanningly deflected by rotating a mirror. Mirrors for this purpose are either a flat mirror which reciprocates, such as a galvano mirror or a rotational polygonal mirror.

The flat mirror type is not suitable for a high speed rotation because the moment required for the rotation is greatly different and because the moment of inertia is low, with the result that the balance thereof is not satisfactory. Therefore, a rotational polygonal mirror which is rotated at a constant speed in one direction is widely used because it has a thick side which is formed into mirror surfaces so that the moment of inertia is sufficiently large, and in addition, the moment is substantially balanced. This type of rotational polygonal mirror can be rotated at a high speed, and therefore, is suitable for a practical scanning optical system.

Although the rotational polygonal mirror has the above described advantages, it still involves the following drawbacks.

If the reflecting surface of the rotational polygon mirror is inclined with respect to the direction of the incident beam (tilting), it is required to provide an expensive tilt correction optical system.

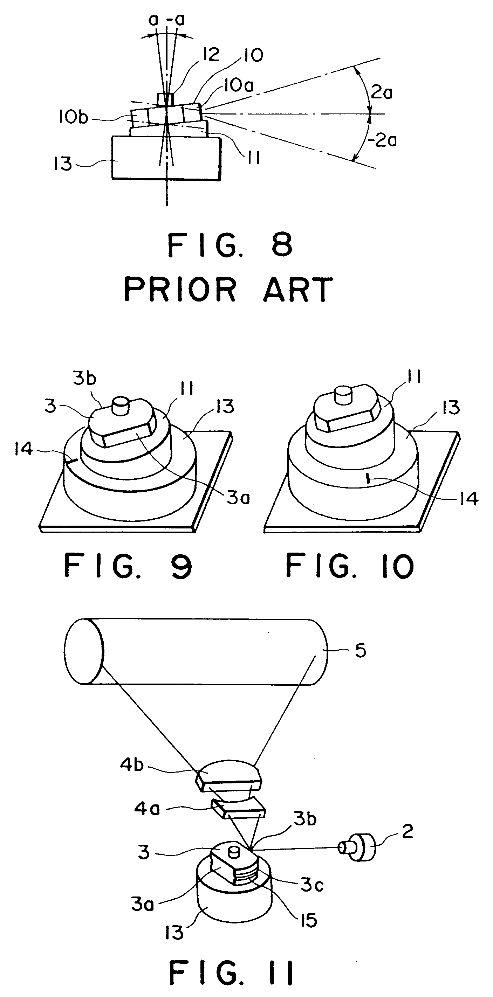

Referring to Figure 8 which shows an example of prior art corresponding to the preamble of claim 1, a rotational hexagon mirror having six reflecting surfaces is rotating to scanningly deflect the beam. The mirror surfaces are slightly tilted, so that the pitches of the scanning lines are not uniform on an unshown photosensitive drum surface on which the beam is incident and which is rotated at a constant speed. The polygon mirror 10 is mounted to the motor flange 11, and the motor rotational shaft 12 and the flange 11 supporting the polygon mirror 10 are slightly oblique to form an angle a seconds due to a mechanical inaccuracy. The beam deflected by the surface 10a is tilted by 2a seconds. As to the adjacent reflecting surface, the tilting is different. When the motor 13 rotates the mirror 10 through 180 degrees, wherein the opposite reflecting surface 10b receives the beam, the tilting of this mirror surface is -a seconds in the direction opposite to that of the first surface. As a result, the tilting of the reflected beam is -2a seconds. Therefore, when the motor rotates the mirror 10 through one full turn, the reflected beam varies within ±2a seconds. Due to this, the pitches between scanning lines are varied.

In addition, when six reflecting surfaces are formed, it is difficult to make the angles of the whole reflecting surfaces with respect to a beam all the same. Therefore, even if the polygonal mirror 10 were mounted without tilting, it would be difficult to present the non-uniform pitch.

For those reasons, it is usual to employ an expensive tilt correcting optical system.

The above mentioned problem has already been mentioned in patent application document DE-A-30 47 813. According to this document the problem is solved by using only one reflecting surface, which is located in a plane comprising the axis of rotation. It is, however, quite evident that such kind of beam deflecting device can hardly be used for high speed scanning operations (which is one of the essential advantages of conventional polygonal mirrors).

### SUMMARY OF THE INVENTION

Accordingly, it is a principal object of the present invention to provide a beam deflecting device which has the advantages of the polygonal mirror, and which is substantially free from influence of tilting.

It is another object of the present invention to provide a beam deflector in which when a light beam is incident on such a surface of a mirror as is not used for the beam deflection, the scanning is not adversely affected.

It is a further object of the present invention to provide a beam deflecting device which is suitably usable with a laser beam printer, by which the pitches of the scanning lines are uniform.

It is a yet further object of the present invention to provide a small-size deflector. According to an embodiment, only one or two reflecting surfaces are used for scanningly deflecting a beam, so that the size of the deflector can has reduced.

These objects are achieved by providing the features claimed in the characterizing portion of claim 1, i.e. by providing a rotational member which is characterized in that two of its at least two reflection surfaces are parallel to each other and to the axis of rotation and are capable of reflecting a laser beam to perform a line scan and which is furthermore characterized in that its other side surfaces are constructed so that when a laser beam impinges thereon, it will not be reflected to perform said line scan.

These and other objects, features and advantages of the present invention will become more apparent upon a consideration of the following description of the preferred embodiments of the present invention taken in conjunction with the accompanying drawings.

### BRIEF DESCRIPTION OF THE DRAWINGS

Figures 1 - 5 are perspective views of beam deflectors according to embodiments of the present invention.

Figure 6 is a timing chart for an embodiment of the present invention.

Figures 7A and 7B are a top plan view and a schematic sectional view of a laser beam printer according to an embodiment of the present invention.

Figure 8 is a sectional view of a conventional beam deflector.

Figures 9 and 10 are perspective views of beam deflectors according to other embodiments of the present invention.

Figure 11 shows a laser beam printer according to another embodiment of the present invention.

Figures 12, 13, 14, 15 and 16 are sectional views according to other embodiments of the present invention.

### DESCRIPTION OF THE PREFERRED EMBODIMENTS

Referring to Figures, preferred embodiments of the present invention will be described wherein the same reference numerals are assigned to the corresponding elements.

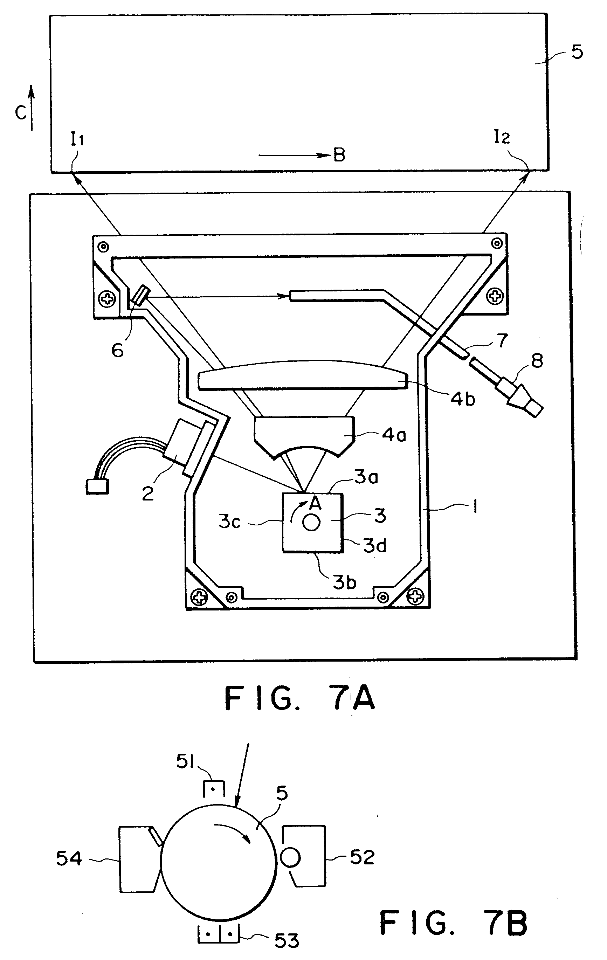

Referring first to Figure 7A, there is shown a laser beam printer incorporating a light deflecting device according to an embodiment of the present invention.

The laser beam printer comprises a molded housing 1, a semiconductor laser source 2 mounted on a side wall of the housing 1, a rotational mirror 3 rotatable in a direction indicated by an arrow A in the housing 1, an f-ϑ lens system 4a and 4b a mirror 6 and a fiber 7.

A laser beam is emitted from the laser source 2 and is modulated in accordance with information to be recorded, and is scanningly deflected by rotation of the rotational mirror 3 in a main scanning direction (direction B). Also, it is scanned in a subordinate scanning direction (direction C), that is, the direction of movement of the photosensitive member 5.

A light sensor 8 receives the laser beam at a predetermined position outside an effective scanning range (between I1 and I2) of the photosensitive member. The light sensor 8 produces a synchronizing signal, in response to which the start of modulation of the laser beam starts.

As shown in Figure 7B around the photosensitive drum 5, there are disposed process means such as a charger 51, a developing device 52, a transfer device 53, a cleaning device 54 and the like.

In this embodiment, no particular tilt correcting optical system is used, such as a cylindrical lens or the like.

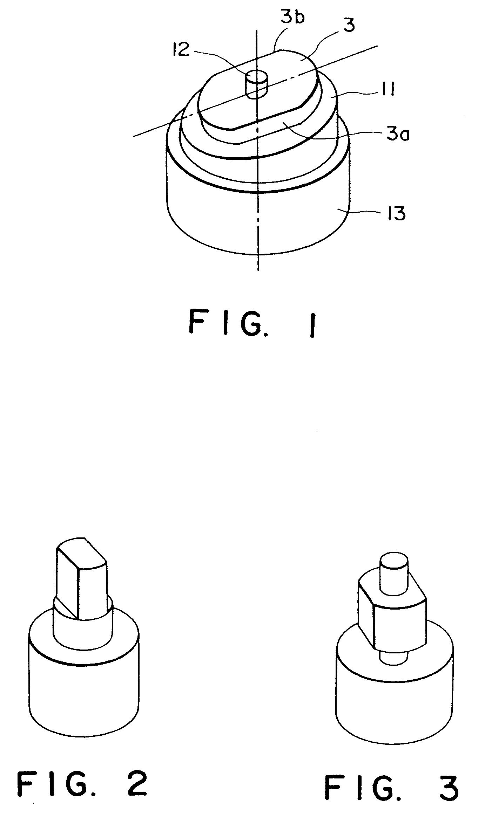

Referring to Figure 1, a beam deflector according to an embodiment of the present invention will be described, wherein two opposite flat surfaces are used as reflecting surfaces for the main scan. That is, a metal cylinder is cut into flat surfaces at diametrically opposed portions. The mirror surfaces are disposed such that when the polygonal mirror mounting flange 11 of the motor is inclined by a seconds, the mirror surfaces 3a and 3b of the mirror 3 are extended along the inclination, that is, the mirror surfaces are parallel with the inclination direction. In other words, when the polygonal mirror mounting flange 11 of the motor is inclined as shown in Figure 1, the axis of the rotational mirror 3 is inclined; and in such a case the mirror 3 is so positioned that the reflecting surfaces are parallel with a plane including the rotational axis and the axis of the mirror 3. By this structure, the mirror surfaces are parallel with the rotational axis, whereby even if the rotational mirror is tilted, the angle of reflection by each of the opposing mirror surfaces 3a and 3b are substantially equal, so that the pitches are uniform. Thus, similarly to the case of using only one reflecting surface, no particular optical system for the tilt correction is required.

As described above, by simply making the two mirror surfaces parallel to the direction of inclination, the influence of the tilt of the mirror surfaces due to the inclination of the polygonal mirror mounting portion of the motor can be avoided. Therefore, the non-uniform scanning line pitch can be minimized.

As an alternative, a polygonal mirror having three or more reflecting surfaces may be used if only two opposing reflecting surfaces are used by controlling the laser beam emitting timing, with the same advantages.

As will be understood from the foregoing, only the two opposing mirror surfaces are used, and therefore, the accuracy of the polygonal mirror mounting surface of the motor is not influential, and it will suffice only if the two opposing mirror surfaces are made accurate. Therefore, the manufacturing is simple, and the cost of the polygonal mirror can be reduced.

As shown in Figure 2, the rotational axis itself may be cut-away.

As shown in Figure 3, a circular column may be cut at two opposite circular portions to provide parallel flat reflecting surfaces.

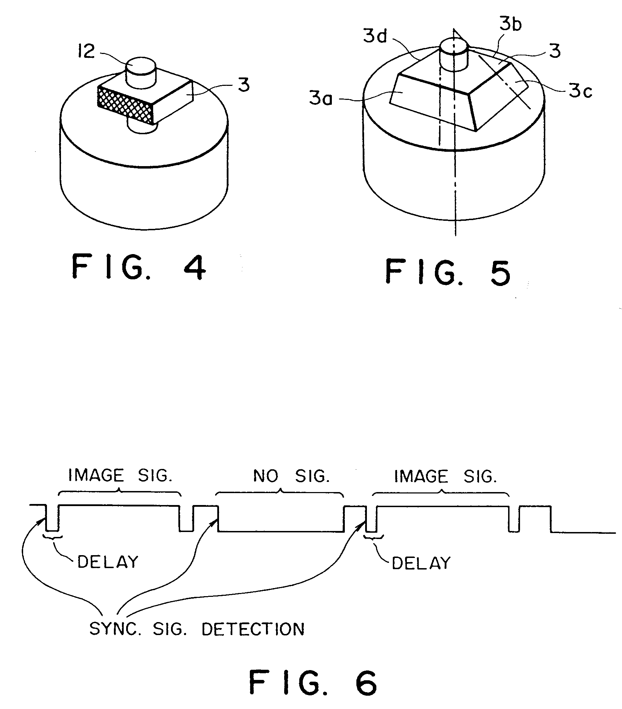

Referring to Figures 4 and 5, a further embodiment of the present invention will be described, wherein even if the laser beam is incident on such a portion which is not used for deflecting the beam, the beam does not reach the member to be scanned.

In Figure 4 embodiment, the portion or portions not used for the scanning have been subjected to an anti-reflection treatment, by for example, coloring it in black. As for another anti-reflection treatment, when a long wavelength range such as a laser beam is used as the scanning beam, an absorption film absorbing such a range of light may be provided.

In Figure 5 embodiment, the surfaces 3c and 3d not used for the scanning are inclined with respect to the rotational axis so as to prevent the beams reflected thereby from being incident on the member to be scanned.

More particularly, referring to Figure 7 which is an exemplary arrangement of the device, wherein a scanning optical system is accommodated in a housing, non-use portions 3c and 3d are inclined such that the beam is incident on a position outside the light emitting window of the housing.

Alternatively, in a laser beam printer, a slit may be provided adjacent the photosensitive member, the non-use portions 3c and 3d are so inclined that the beam is blocked by the slit member.

According to those embodiments, the influence of tilting resulting from inclination of the mounting of the rotational mirror can be substantially neglected.

Referring to Figure 6, operational timing will be described in an exemplary laser beam printer shown in Figure 7 incorporating the present invention. Figure 6 is a time chart of the control of image signals.

As shown in Figure 6, the rotational mirror has four sides, wherein the photosensitive drum 5 rotates in a direction indicated by an arrow C. A scanning beam is reflected by a first surface 3a of the polygonal mirror 3 and is received by a photosensor 8, upon which it produces a synchronization signal. With a predetermined delay of time, an image signal is outputted. Then, the beam modulated in accordance with the image signal scans the photosensitive drum by the main scanning mirror surface 3a. After this first scan is completed, the second beam is scanningly deflected by the second surface 3c. Similarly to the first beam, the photosensor 8 produces a beam detection signal, but at this time, after the predetermined delay of time, no-signal is produced, and therefore, the laser beam from the laser source 2 is not modulated, so that no recording is effected on the photosensitive drum. Next, when the third surface 3b which is the opposite surface of the first surface 3a receives the beam, and the beam detection signal is produced in the photosensor 8, an image signal is produced with a predetermined delay of time.

Thus, even when a square column is used, the non-uniform pitch due to the tilt can be minimized or reduced, by producing the image signals in the beam only when it is directed to the opposite two surfaces.

Accordingly, with the two opposite surfaces which are precise in parallelism and which are only used for scanning the surface to be scanned, the problem of tilt is solved or minimized, and the scanning speed is doubled, as compared with the case where only one surface is used for the beam deflection. If, however, the flange for mounting the rotational mirror is inclined, the two reflecting surfaces used for the scanning are preferably made parallel with the direction of inclination, that is, parallel with a plane including the correct axis and inclined axis.

Further embodiments will be described, wherein two opposite surfaces are used for scanningly deflecting the beam to scan the member to be scanned, and wherein a rotational mirror and the flange for mounting the rotational mirror are mounted at correct positions without difficulty.

Referring to Figure 9, a deflection of a top surface, for example, of the mirror mounting flange 11 when the flange 11 rotates, is measured. An index 14 is marked at least one of two ends of the deflection. The center between the two mirror surfaces of the rotational mirror 2d is aligned with the index 14, and the rotational mirror 14 is mounted there.

Referring to Figure 10, an index 14 is marked between the two points corresponding to the ends of the deflection, and the center of one of the mirror surfaces is aligned with the index 14, and the rotational mirror is mounted there.

With one of these indexes, the two mirror surfaces are made correctly parallel to the inclination simply by aligning the rotational mirror with the index. In this manner, the influence of the rotating surface deflection due to the tilt of the mounting of the rotational mirror to the motor can be minimized.

Further, those indexes are used for rough alignment in the mounting, and after the rotational mirror is once mounted, the rotational mirror 3 may be displaced for fine adjustment relative to the mirror mounting portion 11 so as to minimize the tilt of the rotating surface on the basis of actual measurement of the tilting of the rotational mirror surface. In this case, since the rotational mirror has already been so positioned that the tilting is very small, the fine adjustment is easy.

In the foregoing embodiments, the indexes are marked on the rotor, but this is not limiting, and it may be marked on the other portion, if it rotates as a unit with the rotational mirror such as the flange.

The number of indexes are not limited to one, and plural indexes may be marked. For example, they may be marked at two positions corresponding to the ends of the deflection, whereby the mounting accuracy is further increased.

Also, the rotational mirror may be provided with an index, which is to be aligned with the index of the mounting portion, whereby the mounting accuracy is further increased. In addition, the index is not limited to a visible one but may be optical ones having different reflective index or electrical one having different electric resistance.

In the case that only a part of the side surface of the rotational mirror is used for scanningly deflecting the beam, it is preferable that when the beam is incident on the non-use portion of the rotational mirror as shown in Figures 4 and 5, the beam reflected by the non-use portion does not reach the surface to be scanned such as the photosensitive member. Further embodiments of the present invention will be described wherein even when the beam is incident on the non-use portion, the beam reflected thereby is prevented from scanning the member to be scanned with a simple structure.

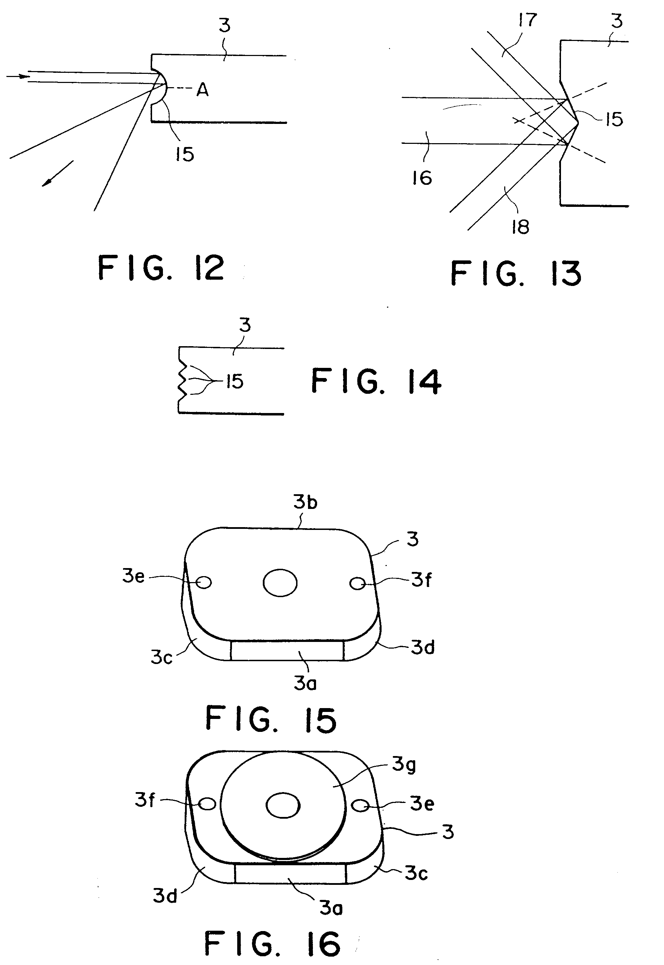

Referring to Figure 11, there is shown a part of a laser beam printer incorporating one of the embodiments, wherein circumferential grooves 15 are formed in the portions receiving the light beam in the non-use surfaces 3c and 3d which are not mirror surfaces. Each of the grooves 15 has a cross-section in a circular form or V form, preferably.

As shown in Figure 12, by forming it into a partial circle, the beam can be expanded to reduce the energy per unit area. However, it is possible that when the beam is incident on the exact center A of the circle, a slight amount of reflected light reaches a photosensitive member. Although the amount is so small that the photosensitive member is effectively exposed, it might be a problem if the sensitivity of the photosensitive member is very high or if the intensity of the beam is very strong.

Referring to Figure 13, there is shown a further preferable embodiment having a V-shaped groove.

The beam 16 incident on the inclined surface portion of the V-shaped groove is reflected to outside the scanning position, and the beam incident on the center of the V-shaped groove is divided into beams 17 and 18, which are both directed outside the scanning position.

Thus, by aligning the center of the beam with the center of the V-shaped groove, the beam reflected thereby can be directed to outside the photosensitive drum surface, and also, even if the position of incident beam onto the rotational mirror is slightly deviated, the beam reaches the inclined surface portion, so that the beam is reflected to a position different from the position to be scanned. The V-shape is preferably symmetrical, since then the depth of the groove can be minimized so that the groove extending to the longitudinal ends, i.e., adjacent reflecting or deflecting surfaces where the groove reduces the effective reflecting surfaces by its cross-section, reduces only a minimum amount of the effective reflecting area in the adjacent reflecting surfaces. However, the V-shape may be asymmetrical, for example, one side is inclined with respect to the rotational axis, while the other is perpendicular thereto. In this case, the arrangement is such that the beam is incident on the inclined side. This groove is less advantageous than the symmetric groove in that the effective reflecting surfaces are reduced by a larger amount. However, it is possible to design inconsideration of this point.

The sides of the V-shape may be curved, if the central edge is pointed.

If it is difficult to sharply point the bottom of the V-shape, an anti-reflection coating may be applied to the bottom.

In this embodiment, the grooves are preferably perpendicular to the rotational axis, since then the width and depth thereof may be made smaller.

It is preferable that the groove is formed in the middle between the top and bottom surfaces of the rotational mirror.

The non-use portions may be of flat surfaces, but more preferably, it is in the form of a part-circle concentric with the rotational axis. By doing so, the manufacturing is easy, and the air resistance during rotation can be minimized, whereby the noise is minimized, and the motor load is minimized.

The number of the grooves is not limited to one, but may be plural, as shown in Figure 14. By doing so, the depth of the groove can be reduced.

Also, it is preferable that an angle of the reflecting surface and an angle of the non-use surface, particularly, the angles of the flat surfaces 3a and 3b and the angles of the part-circular surfaces 3c and 3d with respect to the bottom surface of the rotational mirror are the same, particularly 90 degrees. By doing so, the accuracy of the angle of the rotational mirror with respect to a reference mounting surface can be easily achieved when the reflecting surfaces are formed into mirror surfaces.

The rotational mirror for deflecting the beam has reflecting surfaces for deflecting the beam, which have to be maintained at a uniform and high reflecting condition, and therefore, it should be handled with great care. Further embodiments will be described wherein this problem has been solved.

Referring to Figure 15, there is shown a rotational mirror in a perspective view according to the embodiment. The rotational mirror is provided with through holes 3e and 3f adjacent the non-use surfaces at such positions symmetrical with respect to the rotational axis. The holes have substantially the same size, and are diametrically opposed, that is, they are circumferential away by 180 degrees about the rotational axis. The holes 3e and 3f are formed parallel with the deflecting surfaces 3c and 3d. Therefore, the dynamic balance is maintained. Those holes 3e and 3f are away from the light deflecting surfaces 3a and 3b which are accurately formed, so that even if a small or relatively large force is applied to the holes, no influence is given to the mirror surfaces 3a and 3b.

By handling the rotational mirror using those through holes, the possibility is minimized that the beam deflecting surfaces 3c and 3d are damaged, or contaminated with oily matter.

It is not always necessary that the holes are through holes, but through holes are advantageous in the following. It is possible to skewer plural rotational mirrors to machine or to coat them, so that plural rotational mirrors are processed simultaneously. Therefore, the manufacturing cost may be reduced, and the variations in the manufacturing accuracy can be minimized.

Thus, by the provision of the working holes, preferably through holes, the possibility of the damage to the reflecting surfaces can be prevented.

In this embodiment, the line connecting the two holes 3e and 3f is parallel to the reflecting surfaces 3a and 3b, and therefore, a relatively strong stress resulting from the tools working on the holes 3e and 3f does not deform the reflecting surfaces 3a and 3b.

Further, since the line connecting the holes 3e and 3f is in the middle between the reflecting surfaces 3a and 3b, the above described liabilities are further minimized.

Referring to Figure 16, there is shown a rotational mirror having a reference surface for mounting the rotational mirror to the driving motor. The reference surface 3g is circular substantially tangential to the reflecting surfaces 3a and 3b of the rotational mirror, or smaller. It should be noted that the working holes are formed outside the mounting reference surface. By doing so, some strain resulting from formation of the working holes does not influence the reference surface, so as to maintain the flatness of the reference surface with certainty. Also, the flash resulting from machining the holes does not adversely affect the reference surface.

The reference surface may be formed on the rotor in place of the rotational mirror.

As described hereinbefore, the non-use portions are preferable in the form of a part-circular. When, however, the reflecting surfaces 3a and 3b are made larger, the angle (of contact at the boundaries) between the reflecting surfaces 3a and 3b and the non-use surfaces 3c and 3d become smaller, which is liable to produce turbulence.

In the embodiments of Figures 15 and 16, this problem is minimized, which is particularly significant when a large reflecting surface or reflecting surfaces are formed with a small size rotational mirror.

More particularly, the non-use portion has a small radius of curvature adjacent the reflecting surfaces 3a and 3b, and it becomes larger away from the reflecting surfaces. Further preferably, the radius of curvature continuously changed from light reflecting surface to the non-use surface.

With this structure, the production of turbulence at the boundaries between the reflecting surfaces and the non-use surfaces can be reduced or removed.

While the invention has been described with reference to the structures disclosed herein, it is not confined to the details set forth and this application is intended to cover such modifications or changes as may come within the purposes of the improvements or the scope of the following claims.

## Claims

1. A laser beam deflecting member, comprising
a rotational member (3) extending along a first plane and having a plurality of side surfaces (3a, 3b), at least two of which constitute reflection surfaces capable of reflecting a laser beam to scan a portion (5) to be scanned in a line, said reflecting surfaces being perpendicular to said first plane, and
driving means (13) for rotating said rotational member (3) around a rotational axis,
said first plane being inclined relative to a plane perpendicular to the rotational axis, **characterized in**
that two of said reflecting surfaces are parallel to each other and to the axis of rotation and are capable of reflecting a laser beam to perform said line scan, and
that the other side surfaces (3c, 3d) are constructed so that when said laser beam impinges thereon, it will not be reflected to perform said line scan.

2. A laser beam deflecting member according to claim 1, **characterized in that** said reflecting surfaces are substantially flat, whereas the other side surfaces are arcuated.

3. A laser beam deflecting member according to claim 2, **characterized in that** said arcuated portion is concentric with said rotational axis of said rotational member (3).

4. A laser beam deflecting member according to any of the preceding claims, **characterized in that** said other side surfaces are anti-reflection-treated.

5. A laser beam deflecting member according to any of the preceding claims, **characterized in that** said reflecting surfaces and said other side surfaces form different angles with respect to the beam incident on said rotational member (3).

6. A laser beam deflecting member according to any of the preceding claims, **characterized in that** said rotational member (3) is mounted on a flange (11), and said rotational member (3) is inclined by the mounting.

7. A laser beam deflecting member according to any of the preceding claims, **characterized in that** said driving means (13) includes a rotor (12) rotatable as a unit with said rotational member (3), said rotor (12) being provided with an index (14) for alignment of said rotational member (3) therewith.

8. A laser beam deflecting member according to claim 7, **characterized in that** said index (14) is visible.

9. A laser beam deflecting member according to claim 7, **characterized in that** said index (14) is optically visible.

10. A laser beam deflecting member according to any of the claims 7 to 9, **characterized in that** said index (14) is electrically readable.

11. A laser beam deflecting member according to any of the claims 7 to 10, **characterized in that** said rotational member (3) is provided with another index and in that said rotational member (3) is mounted to said rotor (12) so that said other index and said index (14) of said rotor (12) are substantially aligned.

12. A laser beam deflecting member according to any of the claims 7 to 11, **characterized in that** said rotational member (3) is mounted to said rotor (12) so that said index (14) and a substantial center of one of said reflecting surfaces are aligned.

13. A laser beam deflecting member according to any of the claims 7 to 11, **characterized in that** said rotational member (3) is mounted to said rotor (12) so that said index (14) and a substantial center between said two reflecting surfaces are aligned.

14. A laser beam deflecting member according to any of the preceding claims, **characterized in that** said rotational member (3) is provided with plural holes (3e, 3f) and in that a line connecting said holes is parallel with said reflecting surfaces.

15. A laser beam deflecting member according to claim 14, **characterized in that** said plurality is two and in that said two holes (3e, 3f) are arranged symmetrically with respect to said rotational axis of said rotational member (3).

16. A laser beam deflecting member according to any of the claims 14 and 15, **characterized in that** said holes (3e, 3f) are through holes.

17. A laser beam deflecting member according to claim 16, **characterized in that** said through holes (3e, 3f) extend parallel to said reflecting surfaces.

18. A laser beam deflecting member according to any of the claims 14 to 17, **characterized in that** a distance between said other side surfaces is larger than a distance between the reflecting surfaces and in that said holes (3e, 3f) are outside of said reflecting surfaces as viewed facing said reflecting surfaces.

19. A laser beam deflecting member according to claim 18, **characterized in that** each of said holes (3e, 3f) is equidistant from said reflecting surfaces.

20. A laser beam deflecting member according to any of the claims 14 to 19, **characterized in that** said laser beam deflecting member is provided with a reference surface for mounting of said rotational member (3), and in that said holes (3e, 3f) are outside of said reference surface.

21. A laser beam deflecting member according to any of the preceding claims, **characterized in that** said other side surfaces have a groove (15) which receives the laser beam but which does not reflect the laser beam to scan the portion to be scanned in a line.

22. A laser beam deflecting member according to claim 21, **characterized in that** said groove (15) extends in a plane perpendicular to said rotational axis of said rotational member (3).

23. A laser beam deflecting member according to any of the claims 21 and 22, **characterized in that** said groove (15) extends in the middle between opposite longitudinal end surfaces of said rotational member (3).

24. A laser beam deflecting member according to any of the claims 21 to 23, **characterized in that** said groove (15) has a V-shaped cross-section.

25. A laser beam deflecting member according to any of the claims 21 to 23, **characterized in that** said groove (15) has a part-circular cross-section.

26. A laser beam deflecting member according to any of the claims 21 to 25, **characterized in that** said rotational member (3) includes more than two reflection surfaces for reflecting the beam, and in that only two opposite reflection surfaces are used for reflecting the beam to perform said line scan.

27. A laser beam deflecting member according to any of the preceding claims, **characterized in that** said laser beam deflecting member is used in a laser beam printer having a laser beam source (2) and a photosensitive member (5).

## Patentansprüche

1. Laserstrahl-Ablenkelement, das umfaßt:
- ein Drehglied (3), das sich längs einer ersten Ebene erstreckt sowie eine Mehrzahl von Seitenflächen (3a, 3b) hat, von denen wenigstens zwei Reflexionsflächen bilden, die imstande sind, einen Laserstrahl zu reflektieren, um ein in einer Zeile abzutastendes Teil (5) abzutasten, wobei die erwähnten Reflexionsflächen zu der genannten ersten Ebene rechtwinklig sind, und
- Antriebsmittel (13), um das besagte Drehglied (3) um eine Drehachse herum zu drehen,
- wobei die genannte erste Ebene mit Bezug zu einer zu der Drehachse rechtwinkligen Ebene geneigt ist, dadurch gekennzeichnet,
- daß zwei der erwähnten Reflexionsflächen zueinander sowie zur Drehachse parallel und imstande sind, einen Laserstrahl zu reflektieren, um die genannte Zeilenabtastung durchzuführen, und
- daß die anderen Seitenflächen (3c, 3d) derart konstruiert sind, daß, wenn der Laserstrahl darauf trifft, er nicht zur Durchführung der genannten Zeilenabtastung reflektiert wird.

2. Laserstrahl-Ablenkelement nach Anspruch 1, dadurch gekennzeichnet, daß die erwähnten Reflexionsflächen im wesentlichen eben sind, wogegen die anderen Seitenflächen gekrümmt sind.

3. Laserstrahl-Ablenkelement nach Anspruch 2, dadurch gekennzeichnet, daß der genannte gekrümmte Teil mit der besagten Drehachse des erwähnten Drehgliedes (3) konzentrisch ist.

4. Laserstrahl-Ablenkelement nach einem der vorhergehenden Ansprüche, dadurch gekennzeichnet, daß die erwähnten anderen Seitenflächen reflexmindernd bearbeitet sind.

5. Laserstrahl-Ablenkelement nach einem der vorhergehenden Ansprüche, dadurch gekennzeichnet, daß die erwähnten Reflexionsflächen und die erwähnten anderen Seitenflächen unterschiedliche Winkel mit Bezug zu dem auf das besagte Drehglied (3) einfallenden Strahl bilden.

6. Laserstrahl-Ablenkelement nach einem der vorhergehenden Ansprüche, dadurch gekennzeichnet, daß das besagte Drehglied (3) an einem Flansch (11) montiert und das besagte Drehglied (3) durch die Halterung geneigt ist.

7. Laserstrahl-Ablenkelement nach einem der vorhergehenden Ansprüche, dadurch gekennzeichnet, daß die genannten Antriebsmittel (13) einen als eine Einheit mit dem besagten Drehglied (3) drehbaren Rotor (12) enthalten, wobei dieser Rotor (12) mit einem Index (14) zum Ausrichten des besagten Drehgliedes (3) mit diesem ausgestattet ist.

8. Laserstrahl-Ablenkelement nach Anspruch 7, dadurch gekennzeichnet, daß der genannte Index (14) sichtbar ist.

9. Laserstrahl-Ablenkelement nach Anspruch 7, dadurch gekennzeichnet, daß der genannte Index (14) optisch sichtbar ist.

10. Laserstrahl-Ablenkelement nach einem der Ansprüche 7 bis 9, dadurch gekennzeichnet, daß der genannte Index (14) elektrisch lesbar ist.

11. Laserstrahl-Ablenkelement nach einem der Ansprüche 7 bis 10, dadurch gekennzeichnet, daß das besagte Drehglied (3) mit einem weiteren Index ausgestattet ist und daß das besagte Drehglied (3) an dem erwähnten Rotor (12) derart montiert ist, daß der genannte weitere Index sowie der genannte Index (14) des erwähnten Rotors (12) im wesentlichen ausgefluchtet sind.

12. Laserstrahl-Ablenkelement nach einem der Ansprüche 7 bis 11, dadurch gekennzeichnet, daß das besagte Drehglied (3) an dem erwähnten Rotor (12) derart montiert ist, daß der genannte Index (14) und eine materielle Mitte von einer der besagten Reflexionsflächen ausgefluchtet sind.

13. Laserstrahl-Ablenkelement nach einem der Ansprüche 7 bis 11, dadurch gekennzeichnet, daß das besagte Drehglied (3) an dem erwähnten Rotor (12) derart montiert ist, daß der genannte Index (14) und eine materielle Mitte zwischen den besagten zwei Reflexionsflächen ausgefluchtet sind.

14. Laserstrahl-Ablenkelement nach einem der vorhergehenden Ansprüche, dadurch gekennzeichnet, daß das besagte Drehglied (3) mit mehreren Löchern (3e, 3f) versehen ist und daß eine diese Löcher verbindende Linie zu den besagten Reflexionsflächen parallel ist.

15. Laserstrahl-Ablenkelement nach Anspruch 14, dadurch gekennzeichnet, daß die erwähnte Mehrzahl zwei beträgt und daß die besagten zwei Löcher (3e, 3f) symmetrisch mit Bezug zu der genannten Drehachse des besagten Drehgliedes (3) angeordnet sind.

16. Laserstrahl-Ablenkelement nach einem der Ansprüche 14 und 15, dadurch gekennzeichnet, daß die besagten Löcher (3e, 3f) Durchgangslöcher sind.

17. Laserstrahl-Ablenkelement nach Anspruch 16, dadurch gekennzeichnet, daß die besagten Durchgangslöcher (3e, 3f) parallel zu den erwähnten Reflexionsflächen verlaufen.

18. Laserstrahl-Ablenkelement nach einem der Ansprüche 14 bis 17, dadurch gekennzeichnet, daß ein Abstand zwischen den erwähnten anderen Seitenflächen größer als ein Abstand zwischen den Reflexionsflächen ist und daß sich die besagten Löcher (3e, 3f) bei Betrachtung in Ansicht der erwähnten Reflexionsflächen außerhalb der erwähnten Reflexionsflächen befinden.

19. Laserstrahl-Ablenkelement nach Anspruch 18, dadurch gekennzeichnet, daß jedes der besagten Löcher (3e, 3f) von den erwähnten Reflexionsflächen gleich beabstandet ist.

20. Laserstrahl-Ablenkelement nach einem der Ansprüche 14 bis 19, dadurch gekennzeichnet, daß das besagte Laserstrahl-Ablenkelement mit einer Bezugsfläche zur Montage des genannten Drehgliedes (3) versehen ist und daß sich die besagten Löcher (3e, 3f) außerhalb der erwähnten Bezugsfläche befinden.

21. Laserstrahl-Ablenkelement nach einem der vorhergehenden Ansprüche, dadurch gekennzeichnet, daß die erwähnten anderen Seitenflächen eine Kehle (15) besitzen, die den Laserstrahl empfängt, die jedoch den Laserstrahl nicht reflektiert, um das in einer Zeile abzutastende Teil abzutasten.

22. Laserstrahl-Ablenkelement nach Anspruch 21, dadurch gekennzeichnet, daß die genannte Kehle (15) in einer zur erwähnten Drehachse des besagten Drehgliedes (3) rechtwinkligen Ebene verläuft.

23. Laserstrahl-Ablenkelement nach einem der Ansprüche 21 und 22, dadurch gekennzeichnet, daß die genannte Kehle (15) in der Mitte zwischen einander entgegengesetzten Längs-Stirnflächen des besagten Drehgliedes (3) verläuft.

24. Laserstrahl-Ablenkelement nach einem der Ansprüche 21 bis 23, dadurch gekennzeichnet, daß die genannte Kehle (15) einen V-förmigen Querschnitt hat.

25. Laserstrahl-Ablenkelement nach einem der Ansprüche 21 bis 23, dadurch gekennzeichnet, daß die genannte Kehle (15) einen zum Teil kreisförmigen Querschnitt hat.

26. Laserstrahl-Ablenkelement nach einem der Ansprüche 21 bis 25, dadurch gekennzeichnet, daß das erwähnte Drehglied (3) mehr als zwei Reflexionsflächen, um den Strahl zu reflektieren, besitzt und daß nur zwei einander entgegengesetzte Reflexionsflächen zum Reflektieren des Strahls, um die genannte Zeilenabtastung durchzuführen, verwendet werden.

27. Laserstrahl-Ablenkelement nach einem der vorhergehenden Ansprüche, dadurch gekennzeichnet, daß das besagte Laserstrahl-Ablenkelement in einem Laserstrahldrucker zur Anwendung kommt, der eine Laserstrahlquelle (2) und ein lichtempfindliches Bauteil (5) besitzt.

## Revendications

1. Un élément de déflexion de rayons laser, comprenant un élément rotatif (3) passant le long d'un premier plan et ayant une pluralité de surfaces latérales (3a, 3b), dont deux au moins constituent des surfaces réfléchissantes aptes à réfléchir un rayon laser pour balayer une partie (5) à balayer en ligne, les surfaces réfléchissantes étant perpendiculaires au premier plan, et des moyens d'entraînement (13) pour entraîner en rotation ledit élément de rotation (3) autour d'un axe de rotation, le premier plan étant incliné par rapport à un plan perpendiculaire à l'axe de rotation,
caractérisé en ce que deux desdites surfaces réfléchissantes sont parallèles l'une à l'autre et à l'axe de rotation, et sont aptes à réfléchir un rayon laser pour réaliser ledit balayage linéaire, et en ce que les autres surfaces latérales (3c, 3d) sont construites de sorte que, lorsqu'il y a incidence du rayon laser sur celles-ci ce dernier ne sera pas réfléchi pour réaliser ledit balayage linéaire.

2. L'élément de déflexion de rayons laser selon la revendication 1,
caractérisé en ce que les surfaces réfléchissantes sont sensiblement planes, tandis que les autres surfaces latérales sont arquées.

3. L'élément de déflexion de rayons laser selon la revendication 2,
caractérisé en ce que la partie arquée et l'axe de rotation de l'élément de rotation (3) sont concentriques.

4. L'élément de déflexion de rayons laser selon l'une quelconque des revendications précédentes,
caractérisé en ce que les autres surfaces latérales ont subi un traitement antireflet.

5. L'élément de déflexion de rayons laser selon l'une quelconque des revendications précédentes,
caractérisé en ce que les surfaces réfléchissantes et les autres surfaces latérales forment des angles différents par rapport au rayon incident sur l'élément de rotation (3).

6. L'élément de déflexion de rayons laser selon l'une quelconque des revendications précédentes,
caractérisé en ce que l'élément de rotation (3) est monté sur une semelle (11), et en ce que l'élément de rotation (3) est incliné par le montage.

7. L'élément de déflexion de rayons laser selon l'une quelconque des revendications précédentes,
caractérisé en ce que les moyens d'entraînement (13) comportent un rotor (12) susceptible de tourner solidairement avec l'élément de rotation (3), le rotor (12) étant pourvu d'un index (14) destiné à l'aligner avec l'élément de rotation (3).

8. L'élément de déflexion de rayons laser selon la revendication 7,
caractérise en ce que l'index (14) est visible.

9. L'élément de déflexion de rayons laser selon la revendication 7,
caractérise en ce que l'index (14) est optiquement visible.

10. L'élément de déflexion de rayons laser selon l'une quelconque des revendications 7 à 9,
caractérisé en ce que l'index (14) est lisible électriquement.

11. L'élément de déflexion de rayons laser selon l'une quelconque des revendications 7 à 10,
caractérisé en ce que l'élément de rotation (3) est pourvu d'un autre index et en ce que l'élément de rotation (3) est fixé audit rotor (12) de sorte que l'autre index et ledit index (14) du rotor (12) sont sensiblement alignés.

12. L'élément de déflexion de rayons laser selon l'une quelconque des revendications 7 à 11,
caractérisé en ce que l'élément de rotation (3) est fixé audit rotor (12) de sorte que l'index (14) et un centre substantiel de l'une des surfaces réfléchissantes sont alignés.

13. L'élément de déflexion de rayons laser selon l'une quelconque des revendications 7 à 11,
caractérisé en ce que l'élément de rotation (3) est fixé audit rotor (12) de sorte que l'index (14) et un centre substantiel entre les deux surfaces réfléchissantes sont alignés.

14. Un élément de déflexion de rayons laser selon l'une quelconque des revendications précédentes,
caractérisé en ce que l'élément de rotation (3) est pourvu d'une pluralité de trous (3e, 3f) et en ce qu'une ligne reliant lesdits trous est parallèle auxdites surfaces réfléchissantes.

15. L'élément de déflexion de rayons laser selon la revendication 14,
caractérisé en ce que ladite pluralité est au nombre de deux et en ce que les deux trous (3e, 3f) sont disposés symétriquement par rapport à l'axe de rotation de l'élément de rotation (3).

16. L'élément de déflexion de rayons laser selon l'une quelconque des revendications 14 et 15,
caractérisé en ce que lesdits trous (3e, 3f) sont des trous de passage.

17. L'élément de déflexion de rayons laser selon la revendication 16,
caractérisé en ce que lesdits trous de passage (3e, 3f) passent parallèlement aux surfaces réfléchissantes.

18. L'élément de déflexion de rayons laser selon l'une quelconque des revendications 14 à 17,
caractérisé en ce qu'une distance entre les autres surfaces latérales est supérieure à une distance entre les surfaces réfléchissantes et en ce que lesdits trous (3e, 3f) sont à l'extérieur desdites surfaces réfléchissantes tels que vus face aux surfaces réfléchissantes.

19. L'élément de déflexion de rayons laser selon la revendication 18,
caractérisé en ce que chacun desdits trous (3e, 3f) est à égale distance desdites surfaces réfléchissantes.

20. L'élément de déflexion de rayons laser selon l'une quelconque des revendications 14 à 19,
caractérisé en ce que l'élément de déflexion de rayons laser est pourvu d'une surface de référence pour le montage dudit élément de rotation (3), et en ce que lesdits tous (3e, 3f) sont situés à l'extérieur de ladite surface de référence.

21. L'élément de déflexion de rayons laser selon l'une quelconque des revendications précédentes,
caractérisé en ce que lesdites autres surfaces latérales sont munies d'une rainure (15) qui reçoit le rayon laser mais qui ne réfléchit pas le rayon laser pour balayer la partie à balayer en ligne.

22. L'élément de déflexion de rayons laser selon la revendication 21,
caractérisé en ce que la rainure (15) passe dans un plan perpendiculaire à l'axe de rotation de l'élément de rotation (3).

23. L'élément de déflexion de rayons laser selon l'une quelconque des revendications 21 et 22,
caractérisé en ce que la rainure (15) passe au milieu entre des surfaces d'extrémité longitudinales et opposées de l'élément de rotation (3).

24. L'élément de déflexion de rayons laser selon l'une quelconque des revendications 21 à 23,
caractérisé en ce que la rainure (15) possède une section en forme de V.

25. L'élément de déflexion de rayons laser selon l'une quelconque des revendications 21 à 23,
caractérisé en ce que la rainure (15) possède une section en partie circulaire.

26. L'élément de déflexion de rayons laser selon l'une quelconque des revendications 21 à 25,
caractérisé en ce que l'élément de rotation (3) comporte plus de deux surfaces réfléchissantes pour réfléchir le rayon, et en ce que seulement deux surfaces réfléchissantes opposées sont utilisées pour réfléchir le rayon afin de réaliser ledit balayage linéaire.

27. L'élément de déflexion de rayons laser selon l'une quelconque des revendications précédentes,
caractérisé en ce que ledit élément de déflexion de rayons laser est utilisé dans une imprimante à rayons laser ayant une source de rayons laser (2) et un élément photosensible (5).
